# FASCICULE DE BREVET EUROPEEN

(11) **EP 3 099 958 B1**
(45) Date de publication et mention de la délivrance du brevet: **11.04.2018**
(21) Numéro de dépôt: 15700718.8
(22) Date de dépôt: 20.01.2015
(51) Int. Cl.: F16F 7/12, B64D 1/14, B61G 11/16

(54) **DISPOSITIF D'ATTENUATION D'IMPACT**
AUFPRALLDÄMPFUNGSVORRICHTUNG
IMPACT ATTENUATION DEVICE

(30) Priorité: 29.01.2014 BE 201400046
(43) Date de publication de la demande: 07.12.2016
(73) Titulaire: CMI Defence S.A., 4431 Loncin (BE)
(72) Inventeur: MELIKECHI, Abdenour, B-1370 Jodoigne (BE)
(74) Mandataire: Pronovem
(86) Numéro de dépôt international: PCT/EP2015/051008
(87) Numéro de publication internationale: WO 2015/113867

(56) Documents cités:
- EP-A2- 1 155 940
- FR-A1- 2 085 498
- SU-A1- 431 066
- US-A- 3 446 469
- US-A- 3 696 891
- US-A- 4 509 621

## Description

### Objet de l'invention

La présente invention se rapporte à un absorbeur de choc mécanique destiné à être installé entre la zone d'impact et l'entité à protéger. Plus précisément, elle se rapporte à un absorbeur de choc à dissipation d'énergie par déformation plastique dont les capacités d'absorption sont ajustables manuellement ou automatiquement sur le site de son utilisation ou lors de sa fabrication.

L'absorbeur de choc selon l'invention convient à tout système où des mouvements relatifs à faible ou à grande vitesse sont présents. Il peut ainsi équiper des véhicules terrestres, ferroviaires, aériens ou de transport maritime afin de protéger des équipements ou des occupants contre des chocs mécaniques. Il peut également être intégré à des systèmes de conditionnement pour largage de matériel aéroporté. Il peut en outre être utilisé pour protéger des structures statiques sensibles aux chocs ou bien encore pour protéger des équipements ou parties d'équipements où des chocs sont susceptibles de se produire.

Dans le cas particulier d'applications où une protection contre l'explosion d'une mine ou d'un Engin Explosif Improvisé (IED) sous un véhicule est requise, l'absorbeur de choc selon l'invention peut être dimensionné pour amortir les chocs respectivement subis lors de la projection du véhicule vers le haut et lors du retour au sol du véhicule et être adapté, dans les limites du dimensionnement, au niveau de la menace contre laquelle les occupants veulent se protéger.

### Arrière-plan technologique et état de la technique

Depuis quelques décennies, la problématique de protection des occupants d'un véhicule militaire ou civil soumis à une détonation d'explosif est devenue un sujet majeur préoccupant les décideurs, aussi bien lors des opérations de maintien de la paix que pendant les conflits militarisés. Plusieurs solutions techniques ont été envisagées et certaines ont été mises en oeuvre. Ces solutions sont essentiellement basées sur la dissipation d'énergie par déformation de matière.

Par exemple, le document décrit GB 2 452 589 A décrit un tel dispositif d'absorption d'énergie qui est destiné à protéger les occupants contre les effets d'une force G excessive. Le dispositif comprend une bande d'atténuation disposée entre un châssis du véhicule et une structure attachée au siège de l'occupant. Lors d'une explosion, la bande d'atténuation est pliée et tirée entre des rouleaux qui sont solidaires de la structure du siège de l'occupant, ce qui permet d'absorber une partie de l'énergie.

Du document US 3,446,469, on connaît un dispositif d'absorption de choc muni d'une plateforme supportant une charge à protéger contre le choc. La plateforme est montée sur un mécanisme à ciseaux avec des unités compressibles disposées en dessous de la plateforme et destinées à se déformer en cas de choc.

Des documents SU 431 066, EP 1155 940, US 3 696 891, US 4,509,621 et FR 2 085 498, on connaît des dispositifs d'absorption d'énergie comprenant un élément dissipateur déformé à l'aide de billes, le document SU 431 066 représentant l'état de la technique la plus proche.

De manière générale, les mécanismes proposés dans l'art antérieur sont conçus pour dissiper un maximum d'énergie sur une course donnée, mais dimensionnés pour que la réponse de l'absorbeur de choc soit optimalisée pour une configuration donnée de la menace, c'est-à-dire des caractéristiques préalablement supposées de l'explosion (charge explosive, distance entre l'explosif et le véhicule, etc.). Ainsi, la majorité des dispositifs actuels ne sont pas ajustables en fonction de la masse de l'occupant, de la configuration du véhicule (masse, inerties, ...etc.) ou de la charge explosive. Or, la nature des conflits et des menaces d'aujourd'hui font que les opérateurs sur le terrain font face à des menaces totalement diverses dont les caractéristiques ne peuvent pas être identifiées lors de la phase de préparation des missions et encore moins lors de la conception des solutions de protection.

En outre, les mécanismes proposés ne permettent généralement pas de contrôler les déformations plastiques mises en jeu. Cela a pour conséquence que l'accélération subie par l'occupant lors du choc est variable au cours du temps avec un pic en début de course suivi d'une décroissance jusqu'à dissipation totale de l'énergie mise en jeu; un tel comportement étant révélateur d'une absence d'optimisation.

Ensuite, les mécanismes proposés pour la protection anti-mine sont conçus afin de palier au blast de l'explosion se produisant sous un véhicule, c'est-à-dire pour palier au premier choc subi par les occupants lors de la projection vers le haut du véhicule. En général, ces mécanismes ne tiennent pas compte du second choc, appelé «drop down», causé lors du retour au sol du véhicule. Or, l'accélération subie lors du choc secondaire, même si elle est d'amplitude moindre que pour le choc primaire, est néanmoins très importante et a pour caractéristique d'être ressentie sur un lapse de temps plus étendu que pour le premier choc.

Le document WO 2010/105055 offre en partie une solution aux différents problèmes mentionnés ci-dessus. Le dispositif de dissipation d'énergie proposé dans ce document est mécanique ou hydraulique et comporte des moyens pour ajuster le degré d'absorption en fonction du poids de l'occupant et, ce, aussi bien pour le choc primaire que pour le choc secondaire. Le système prévoit un ajustement qui peut être différent pour le choc primaire et pour le choc secondaire et pourrait donc être optimisé pour tenir compte des caractéristiques différentes des deux chocs en termes d'accélération. Cependant, ce dispositif a pour inconvénient que le système est repositionné en position de repos ou, en d'autres termes, réinitialisé entre le choc primaire et le choc secondaire. Prendre en compte les caractéristiques différentes des deux chocs va donc nécessiter un ajustement en temps réel entre les deux chocs. Sur le terrain, il est peu probable qu'un tel système soit opérationnel car le premier choc cause de nombreux dégâts, tant mécaniques qu'électroniques, qui rendront l'ajustement en temps réel avant le second choc difficile, voire impossible.

### Buts de l'invention

La présente invention a pour but de réaliser un absorbeur de choc qui palie aux inconvénients de l'état de la technique.

Plus précisément, la présente invention a pour but de réaliser un absorbeur de choc dont les caractéristiques peuvent être adaptées aux conditions réelles d'utilisation de manière à optimiser la protection. Selon l'invention, les caractéristiques de l'absorbeur de choc doivent pouvoir être adaptées pour tous les domaines d'application visés, à savoir dans le cadre de la protection des occupants d'un véhicule soumis à une explosion de mine ou à une explosion d'un engin explosif improvisé, dans le cadre de la protection de personnes et de biens matériels en cas d'accidents pendant le transport utilisant des moyens ferroviaires, terrestres, maritimes, ou aériens, ou encore dans le cadre de la protection de biens matériels ou de consommation lors des opérations de largage depuis le ciel.

Pour la protection anti-mine et IED, la présente invention a également pour objectif de réaliser un absorbeur de choc équipé d'un dispositif approprié pour atténuer le choc secondaire lors du retour du véhicule au sol et, ce, en tenant compte de ses caractéristiques propres. Le dispositif selon l'invention devra ainsi être dimensionné pour permettre une absorption d'énergie différente pour le choc primaire et pour le choc secondaire.

Finalement, la présente invention vise également à réaliser un absorbeur de choc permettant de transmettre aux occupants une accélération quasi constante pendant la durée de l'événement, et de limiter à un niveau acceptable la sévérité du choc transmis aux personnes ou aux biens matériels que l'on veut protéger et, ce, dans les diverses situations citées ci-dessus.

### Brève description des figures

La figure 1 représente l'absorbeur de choc selon l'invention positionné à l'intérieur de la cellule équipage d'une tourelle.

La figure 2(a) est une vue en coupe axiale de l'absorbeur de choc selon l'invention avec un mécanisme dissipateur dimensionné pour dissiper l'énergie relative au choc primaire et la figure 2(b) est une vue en coupe axiale de l'absorbeur de choc selon l'invention avec un mécanisme dissipateur dimensionné pour dissiper respectivement l'énergie relative au choc primaire (blast) et au choc secondaire (drop down). Dans ces figures, l'absorbeur est en position de repos, c.à.d. qu'il n'a pas été sollicité.

La figure 3 présente une variante des absorbeurs de choc selon la figure 2. Selon cette variante, le(s) dissipateur(s) d'énergie est (sont) de forme tronconique plutôt que cylindrique.

La figure 4 est une vue tridimensionnelle de l'absorbeur de choc selon l'invention. Sur le dispositif représenté, les moyens d'ajustement sont motorisés et commandés par un contrôleur relié à différents capteurs.

La figure 5 est une vue du dessus de l'absorbeur de choc selon l'invention.

La figure 6 est une vue en coupe transversale simplifiée d'une partie de l'absorbeur de choc selon l'invention. L'élément dissipateur monté sur son support qui, dans cet exemple, comporte des rainures est représenté. Une bille positionnée en regard de chaque rainure déforme l'élément dissipateur sous l'effet du choc. A titre d'exemple, huit billes sont réparties autour de l'élément dissipateur.

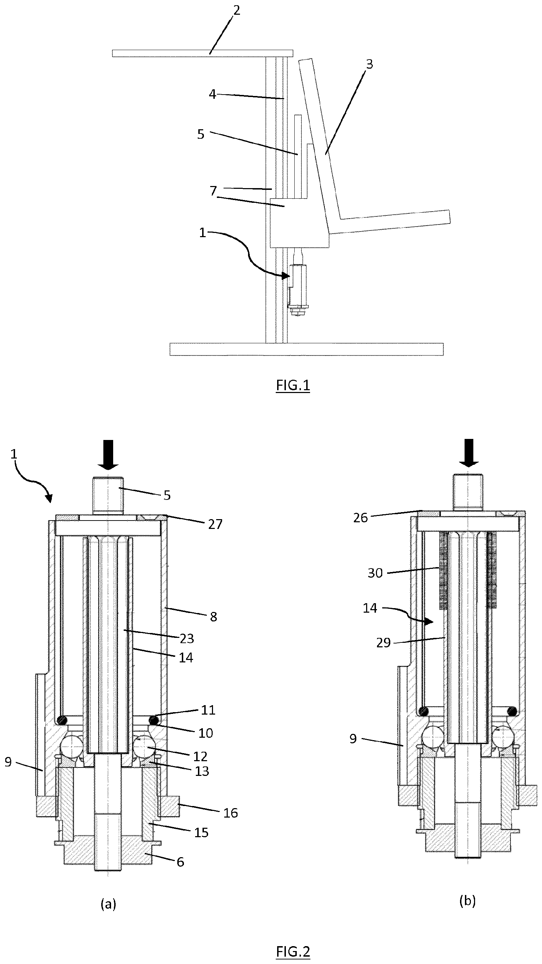

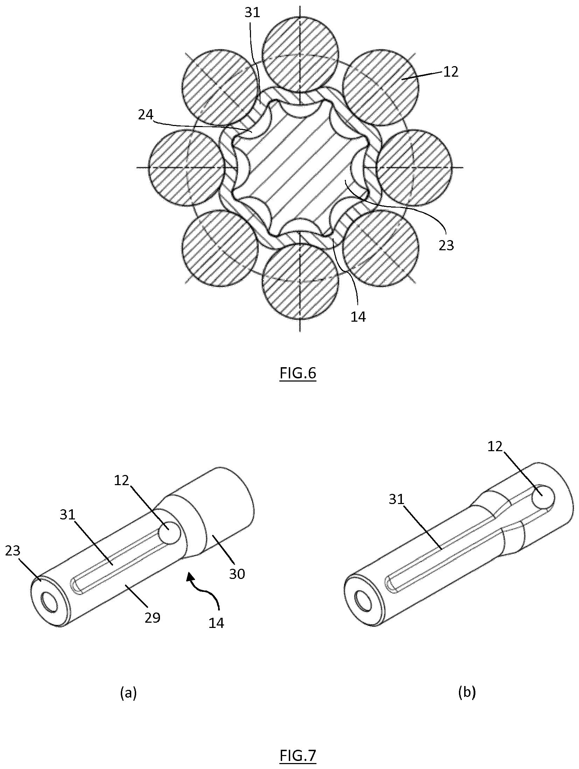

De manière schématique, les figures 7(a) et (b) représentent respectivement le sillon qui se forme dans l'élément dissipateur lors du choc primaire et lors du choc primaire et secondaire pour l'absorbeur de choc selon la variante de la figure 2(b). Seule une bille et le sillon correspondant sont représentés.

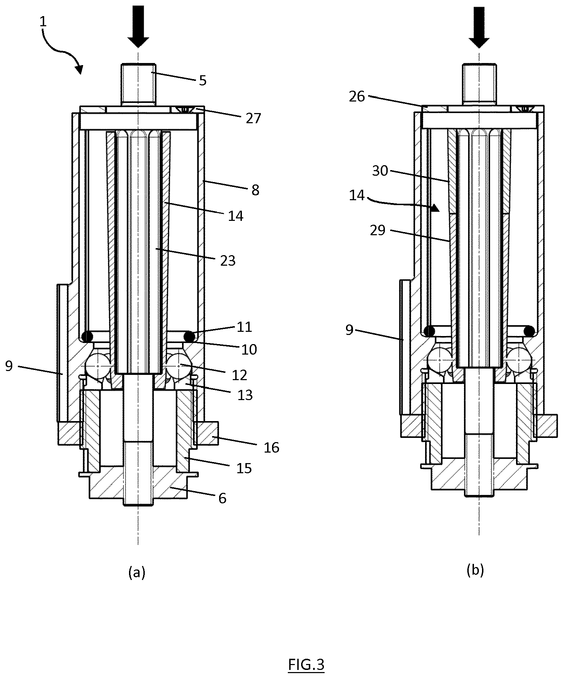

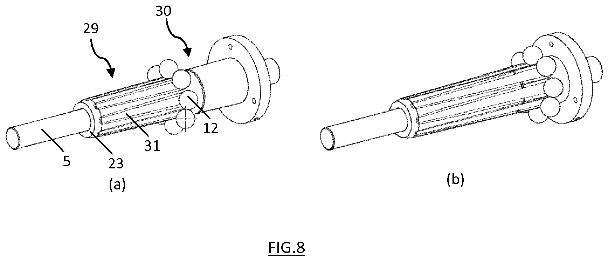

De manière plus détaillée, les figures 8(a) et (b) représentent respectivement les sillons qui se forment dans l'élément dissipateur lors du choc primaire et lors du choc primaire et secondaire pour l'absorbeur de choc selon la variante de la figure 3(b).

### Légende

- (1): Absorbeur de choc
- (2): Toit du véhicule
- (3): Siège
- (4): Colonne
- (5): Tige
- (6): Base inférieure du support
- (7): Guides pour le déplacement linéaire du siège
- (8): Corps
- (9): Structure de fixation
- (10): Butée
- (11): Amortisseur de fin de course
- (12): Bille
- (13): Cage à billes
- (14): Elément dissipateur
- (15): Ecrou
- (16): Contre-écrou
- (17): Moteur
- (18): Contrôleur
- (19): Capteur de poids
- (20): Capteur de vitesse
- (21): Capteur de position
- (22): Capteur de blast
- (23): Support
- (24): Rainure ou gorge de guidage
- (25): Ouverture d'allègement
- (26): Plaque
- (27): Languette
- (28): Roue dentée
- (29): Première partie de l'élément dissipateur
- (30): Seconde partie de l'élément dissipateur
- (31): Sillon ou empreinte

### Principaux éléments caractéristiques de l'invention

La présente invention se rapporte à un dispositif d'absorption d'énergie comprenant :
- un support muni de rainures,
- un élément dissipateur monté autour dudit support et destiné à se déformer plastiquement sous l'effet d'un choc,
- des billes montées avec une pression donnée contre l'élément dissipateur et destinées à déformer l'élément dissipateur, lesdites billes étant montées en regard desdites rainures du support et étant destinées à déformer l'élément dissipateur sur la longueur des rainures.

Selon des modes particuliers de l'invention, le dispositif comporte au moins une ou une combinaison appropriée des caractéristiques suivantes :
- il comprend un corps creux dans lequel l'élément dissipateur et son support sont destinés à coulisser lors du choc ;
- les billes sont montées dans une cage circulaire et prennent appui dans la direction longitudinale du corps creux sur une surface intérieure dudit corps creux et dans la direction transversale du corps creux sur l'élément dissipateur ;
- ladite surface intérieure est de forme conique ou curviligne ;
- il comprend des moyens pour ajuster la pression d'application des billes contre l'élément dissipateur ;
- lesdits moyens comprennent un écrou dont la rotation en utilisation entraine un déplacement des billes le long de la surface intérieure du corps creux, ce qui permet d'ajuster la pression d'application des billes sur l'élément dissipateur ;
- lesdits moyens comportent un moteur et un contrôleur relié à un ou plusieurs capteurs ;
- le support comporte une partie cylindrique, les rainures étant disposées sur la surface extérieure de la partie cylindrique et s'étendant selon la direction longitudinale de ladite partie cylindrique ;
- l'élément dissipateur forme un manchon annulaire d'épaisseur constante le long de sa direction longitudinale ;
- l'élément dissipateur forme un manchon annulaire d'épaisseur variable le long de sa direction longitudinale ;
- l'élément dissipateur comporte selon sa direction longitudinale deux parties successives, appelées première partie et seconde partie, présentant des caractéristiques géométriques et/ou physico-chimiques différentes afin d'amortir respectivement un premier choc et un second choc ;
- la seconde partie peut être d'épaisseur et de longueur différentes de celles de la première partie ;
- la seconde partie peut être plus courte et plus épaisse que la première partie ;
- l'épaisseur de l'élément dissipateur est croissante par rapport à la direction de déplacement de l'élément dissipateur en cas de choc ;
- la première partie et la seconde partie de l'élément dissipateur sont respectivement d'épaisseur constante ;
- le support est surmonté à une extrémité d'une plaque munie de languettes reposant sur une extrémité du corps creux ;
- l'élément dissipateur est vissé sur le support pour faciliter son remplacement.

La présente invention se rapporte également à un véhicule ou à un système de conditionnement pour largage de matériel, de biens ou de personnes comportant un dispositif d'absorption d'énergie tel que décrit ci-dessus.

La présente invention se rapporte en outre à un procédé d'absorption d'énergie destiné à protéger une structure et/ou un occupant lors d'un choc à l'aide du dispositif tel que décrit ci-dessus, le procédé comprenant une étape de mouvement relatif de l'élément dissipateur et de son support par rapport au corps creux donnant lieu à une déformation plastique de l'élément dissipateur par les billes, lesdites billes étant guidées dans les rainures.

Selon des modes particuliers de l'invention, le procédé comporte au moins une ou une combinaison appropriée des caractéristiques suivantes :
- il comprend une étape d'ajustement de la pression d'application des billes sur l'élément dissipateur, l'ajustement s'effectuant sur base de mesures issues d'un ou plusieurs capteurs ;
- il comprend une étape de rupture des languettes de la plaque précédant le mouvement relatif entre l'élément dissipateur monté sur son support et le corps creux ;
- les billes déforment l'élément dissipateur sur la première partie lors du premier choc et sur la seconde partie distincte de la première partie lors du second choc, le premier choc survenant lorsqu'un véhicule saute sur un engin explosif et le second choc survenant lorsque le véhicule retombe sur le sol ;
- il comprend une étape de remplacement de l'élément dissipateur avant le choc.

### Description générale de l'invention

L'absorbeur de choc selon l'invention peut équiper un véhicule. Le terme véhicule doit être compris au sens large, à savoir qu'il regroupe tout moyen de transport incluant les ascenseurs, téléphériques, etc. Il peut également être destiné à protéger contre les chocs des infrastructures qu'elles soient civiles ou militaires. On peut, par exemple, citer comme domaine d'application l'industrie nucléaire. Il peut aussi être intégré à des systèmes de conditionnement pour largage depuis le ciel de charges (matériel habité ou non, produits de consommation ou autres).

Il se place entre la structure qui subit le choc et l'élément à protéger contre le choc. Dans le cas de l'explosion d'une mine sous un véhicule, l'absorbeur se place entre le siège de l'occupant et le composant interface de la plateforme (véhicule, tourelle, ou autre cellule d'équipage) par le biais duquel le choc est transmis au siège. Pour une cellule équipage installée dans un autre système, qui lui-même est monté sur un véhicule (cas d'une tourelle), l'absorbeur peut également être monté entre la cellule équipage (panier de tourelle ou autre) et l'interface entre cette cellule et le véhicule.

L'absorbeur de choc selon l'invention est basé sur le principe de la dissipation d'énergie par déformation plastique. Des billes sont pressées avec une force plus ou moins importante contre un élément dissipateur monté sur un support. Lors du choc, un mouvement relatif entre les billes et l'élément dissipateur se produit, ce qui permet de dissiper l'énergie par déformation du matériau constituant l'élément dissipateur.

Selon l'invention, la dissipation d'énergie est adaptable et ajustable en fonction du niveau de risque et en fonction des facteurs influençant la transmissibilité du choc.

L'adaptation au niveau de risque peut s'effectuer aisément en ajustant la pression de billes, comme expliqué plus loin, ou si nécessaire, en remplaçant l'élément dissipateur par un modèle spécifique ayant les caractéristiques de matériau et/ou la géométrie appropriées. Cette sélection du matériau et de sa géométrie parmi les cas envisagés préalablement peut se faire à tout moment avant d'engager des opérations ou après les premiers évènements redoutés. L'élément dissipateur peut en outre être dimensionné pour amortir respectivement le choc primaire et le choc secondaire. Il peut ainsi avoir une épaisseur variable et/ou être constitué de matériaux différents.

L'ajustement s'effectue en modulant la pression d'application des billes contre le matériau déformable. Les billes sont soumises à une pression ajustable par le biais d'une entretoise ou sans entretoise et par le biais d'un élément fileté. Cet élément fileté peut lui-même être ajusté manuellement ou automatiquement. L'ajustement tient compte de l'ensemble des facteurs pertinents dont dépend la transmissibilité du choc de la structure portante (véhicule) vers l'entité à protéger (l'occupant) et des conditions spécifiques de l'application. Dans le cas d'une explosion de mine sous un véhicule, l'ajustement tient compte des caractéristiques suivantes: (i) masse de la structure (véhicule et l'ensemble de ses équipements embarqués) soumise directement au blast de l'explosion, (ii) masse de l'entité à protéger (par exemple, la masse de l'occupant), (iii) localisation relative attendue (par rapport au véhicule) de l'explosion sous le véhicule, (iv) charge de l'explosif (équivalent TNT), (v) distance de l'explosif par rapport au plancher de la structure, (vi) sévérité du choc induit par le retour au sol du véhicule.

Par exemple, dans le cas des véhicules blindés, il est requis d'apporter une protection pour des niveaux de charges explosives (mines) classés en plusieurs catégories (STANAG 4569): 6 kg, 8 kg ou 10 kg équivalent TNT. Sur le terrain, l'élément actif pourra être sélectionné pour adapter l'absorbeur à la catégorie de mine ciblée, et dans une certaine limite, pour adapter l'absorbeur à des niveaux de charges autres que celles considérées comme "standard". Les moyens d'ajustement permettront le cas échéant d'ajuster sur site la pression des billes recommandée pour une catégorie donnée. Par exemple, si l'élément actif est sélectionné pour la catégorie 6 kg TNT, l'ajustement permet de couvrir des niveaux de charge proches de la valeur centrale de la catégorie, soit 6 kg +/- 2 kg TNT (ces valeurs sont indicatives et non limitatives).

### Description détaillée de l'invention

A titre d'exemple non limitatif, l'absorbeur de choc selon l'invention est illustré ci-dessous pour des systèmes d'assises (sièges) équipant du matériel roulant tel que des chars de combat, des tourelles de char, des véhicules des forces de l'ordre, des véhicules des forces de maintien de la paix ou des véhicules civils nécessitant une protection anti-mine.

La figure 1 représente l'intérieur du panier de la tourelle avec le panier qui est solidaire du châssis du véhicule par l'intermédiaire d'une liaison mécanique au niveau du toit du véhicule 2 (non représenté dans son entièreté). Dans l'exemple illustré, l'absorbeur de choc 1 est monté entre le siège 3 et la colonne 4 et fixé au niveau de cette dernière.

L'absorbeur de choc 1 selon l'invention est représenté en détail aux figures 2 et 3. Selon une variante présentée aux figures 2(a) et 3(a), seul un mécanisme de dissipation d'énergie est prévu pour le choc primaire. Selon une autre variante présentée aux figures 2(b) et 3(b), un mécanisme de dissipation est prévu pour le choc primaire et pour le choc secondaire.

Indépendamment de la variante considérée, l'absorbeurde choc 1 comporte deux parties principales qui vont se déplacer relativement l'une par rapport à l'autre lors du ou des chocs. Une première partie est solidaire de la plateforme du véhicule et, plus précisément, de la colonne 4 pour l'exemple illustré et une seconde partie est solidaire de l'entité à protéger, à savoir le siège 3 pour l'exemple illustré. Dans ce dernier cas, la liaison entre le siège 3 et la seconde partie est assurée par une tige 5 qui est fixée au siège 3 et à la base inférieure 6 de la seconde partie (voir figures 1, 2 et 3). Lors d'un choc significatif, la seconde partie et le siège 3 se déplacent par rapport à la première partie, le déplacement linéaire du siège 3 étant assuré grâce aux guides 7.

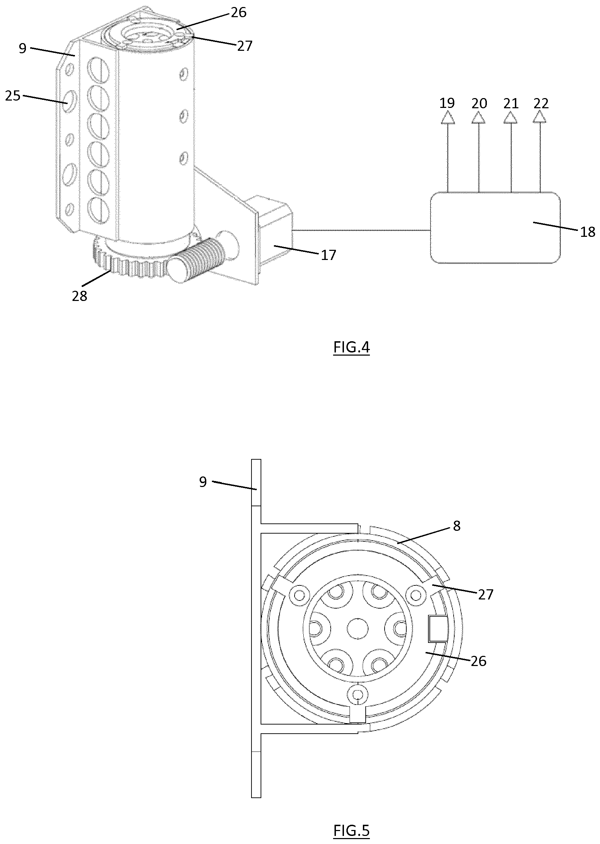

La première partie comporte un corps 8 fixé à la colonne 4 du panier à l'aide de la structure de fixation 9 visible entre autres à la figure 4. Ce corps est creux, la seconde partie de l'absorbeur étant destinée à coulisser au sein de cette partie creuse lors du choc. A l'intérieur du corps creux 8 sont montées des billes 12 destinées à déformer le composant actif 14 de la seconde partie lors du choc. Ces billes 12 sont de dureté supérieure à celle du composant actif 14 et, de préférence, métalliques. Elles sont disposées dans une cage circulaire 13, type cage de roulement à billes. Elles sont calées axialement à l'arrière d'une butée 10 prévue à l'intérieur du corps creux pour limiter la course de la seconde partie. La surface arrière de la butée 10 présente une forme sphérique ou conique pour des raisons explicitées ci-dessous. Les billes sont calées radialement sur le composant actif 14 à l'aide de moyens d'ajustement qui comportent un élément fileté, tel qu'un écrou 15. La rotation de l'écrou 15 permet de moduler la force appliquée sur la cage à billes 13 et, par là même, le déplacement radial des billes 12 grâce à la forme particulière de la surface arrière de la butée. Une rotation de l'écrou dans le sens des aiguilles d'une montre entraîne un mouvement des billes vers l'axe du dispositif et de fait les billes appliquent une pression plus importante sur le dissipateur d'énergie. A l'inverse, une rotation de l'écrou d'ajustement dans le sens contraire des aiguilles d'une montre entraîne une diminution de la pression appliquée par les billes sur le dissipateur. On précisera que l'ajustement est effectué de manière à ce que la dissipation d'énergie s'effectue sur toute la longueur de l'élément actif. L'ajustement peut être manuel et, dans ce cas, un contre-écrou 16 est prévu pour sécuriser le réglage ou automatique via un moteur contrôlé à distance à l'aide d'un dispositif annexe spécifique. Dans l'exemple illustré à la figure 4, le dispositif motorisé (moteur 17) est relié à un calculateur 18 lui-même relié à un ou plusieurs capteurs. Par exemple, le calculateur 18 peut être relié à un capteur de poids de l'occupant 19, de vitesse 20, de position des éléments mobiles de l'absorbeur 21, et du blast 22.

La seconde partie de l'absorbeur comporte un support 23 de forme majoritairement cylindrique qui est visible entre autres aux figures 2, 3, 6 et 7. Le cylindre 23 sert de support à l'élément actif 14, aussi appelé élément dissipateur, se présentant sous forme de manchon. De préférence, le support 23 est muni de plusieurs rainures 24 (voir fig.6). Les rainures 24 s'étendent axialement sur la hauteur du cylindre et servent de gorges de guidage aux billes 12 lors du coulissement du support 23. Les rainures sont distribuées sur le périmètre du support de manière à assurer la symétrie des efforts développés.

Selon la variante des figures 2(a) et 3(a), l'élément dissipateur 14 monté sur le support 23 est réalisé dans un seul matériau (composite, métal ou autre) et est destiné à dissiper l'énergie lors du choc primaire. Comme illustré à la figure 2(a), il peut être d'épaisseur constante formant dans ce cas une pièce parfaitement cylindrique. Il peut également être d'épaisseur variable avec, de préférence, une épaisseur de paroi croissante dans la direction de déplacement du support comme montré à la figure 3(a). On parlera alors de forme quasi cylindrique ou légèrement tronconique. Cette forme particulière favorise une transmission sous forme de plateau de l'accélération, c.à.d. une transmission à un niveau relativement constant de l'accélération à l'occupant en dehors des phases transitoires de début et fin de course du support.

Selon l'autre variante des figures 2(b) et 3(b), l'élément dissipateur 14 est conçu de manière à pouvoir recevoir deux parties distinctes, numérotées 29 et 30. La première partie 29 est conçue dans le but de dissiper l'énergie qui résulte directement du blast de l'explosion, la seconde partie 30 étant conçue pour dissiper l'énergie du choc qui résulte du retour du véhicule au sol. Les deux parties sont dimensionnées pour prendre en compte les mises en charge différentes des deux chocs. La mise à dimension peut s'effectuer en utilisant des matériaux différents, des épaisseurs différentes et/ou des longueurs différentes pour les deux parties respectives. Par exemple, l'épaisseur de la seconde partie 30 peut être supérieure à celle de la première partie et de longueur différente. Dans l'exemple illustré aux figures 2(b), 3(b), 7 et 8, la seconde partie 30 est prévue sur environ un tiers de la course totale de dissipation. Chaque partie peut être cylindrique comme à la figure 2(b) ou être tronconique comme à la figure 3(b). Dans ce dernier cas, la surface extérieure de la seconde partie tronconique s'inscrit dans la continuité de la première partie tronconique.

Finalement, on mentionnera que le support 23 est surmonté à sa base supérieure d'une plaque circulaire 26 avec des languettes 27 qui recouvrent l'extrémité du corps 8 de l'absorbeur (voir figures 4 et 5). Ces languettes empêchent tout mouvement de la seconde partie sous l'effet de simples vibrations ou de chocs légers. Elles servent donc de déclencheurs et sont dimensionnées pour n'être sectionnées qu'au-delà d'un certain niveau d'accélération initialement défini. Elles peuvent, par exemple, être au nombre de trois et uniformément réparties le long du périmètre de la plaque.

Le principe de fonctionnement du dispositif selon l'invention est le suivant. Lorsqu'une charge explosive est activée sous le véhicule porteur de la tourelle, le véhicule est projeté vers le haut avec une impulsion telle que le véhicule est soumis à une forte accélération globale. L'inertie du système constitué par l'occupant du siège et le siège-même de la tourelle entraine un mouvement relatif de l'occupant de la tourelle par rapport au fond du panier. En effet, l'occupant et son siège tendent à se rapprocher du fond du panier. Lors de ce mouvement de « montée » du fond du panier vers le siège, la tige 5 solidaire du siège 3 force le support 23 du dissipateur d'énergie à se déployer, c'est-à-dire à sortir du corps principal 8 selon la direction indiquée par la flèche aux figures 2 et 3. Le mouvement relatif qui se crée entre le composant actif 14 et les billes 12 permet de dissiper l'énergie surtoute la longueur du composant actif et par là-même, de réduire l'accélération transmise à l'occupant du véhicule "soufflé". Lorsque le support comporte des rainures, les billes déforment plastiquement l'élément dissipateur là où sont prévues les gorges. La déformation en forme de sillon 31 (voir figures 7 et 8) s'effectue sur toute la longueur du composant actif 14 composé d'une seule ou de deux partie(s) 29,30 selon que l'absorbeur est dimensionné pour prendre en compte le choc primaire ou le choc primaire et le choc secondaire respectivement.

### Avantages de l'invention

La solution technique proposée par la présente invention s'affranchit dans une certaine limite des conditions réelles. Tant que les conditions environnementales considérées lors de la conception intègrent les limites acceptables, les opérateurs peuvent, sur site, ajuster de manière manuelle ou automatique l'absorbeur de choc afin que ce dernier réponde aux conditions réelles. Ceci est applicable notamment pour la protection anti-mines et contre les Engins Explosifs Improvisés (IED) mais aussi pour toutes sortes de situations où des chocs redoutés peuvent se produire de manière accidentelle. De même, l'élément dissipateur peut aisément être changé sur le terrain, comme expliqué plus haut, en fonction de la menace répertoriée sur le site des hostilités ou d'utilisation.

L'absorbeur de choc selon l'invention permet de protéger les occupants en réduisant à des niveaux acceptables l'accélération qui leur est transmise. L'accélération transmise aux occupants est quasiment constante, hormis pendant les phases transitoires en début et fin de course, grâce aux caractéristiques géométriques et matérielles de l'élément dissipateur d'énergie. En outre, les rainures prévues sur le support du dissipateur permettent un guidage des billes de manière à s'assurer que leurs empreintes sur le support soient parfaitement linéaires. Cette linéarité du sillon évite des perturbations non souhaitables de l'accélération transmise. Cette forme particulière du support permet donc de guider la déformation du dissipateur de manière à éviter au maximum un comportement aléatoire lors de la dissipation d'énergie qui pourrait se traduire par des variations conséquentes de l'accélération transmise aux occupants. De même, la forme légèrement tronconique de l'élément dissipateur favorise dans certains cas une réponse en plateau de l'accélération subie par l'occupant.

Grâce aux moyens d'ajustement, la pression d'application des billes sur l'élément dissipateur peut être modulée de manière à ce que la dissipation d'énergie s'effectue sur toute la longueur de l'élément dissipateur. Le fait de dissiper l'énergie alors que l'accélération transmise aux occupants reste quasiment constante et au niveau le plus élevé acceptable tout le long de la course de dissipation, garantit le meilleur compromis entre l'opérabilité en terrain hostile qui requiert de concevoir des véhicules relativement bas pour des raisons de visibilité et de stabilité et la protection anti-mines qui elle exige une garde au sol (stand-off distance) conséquente de manière à ne subir qu'une fraction réduite du blast d'explosion.

Le dispositif selon l'invention dissipe aussi bien l'énergie du choc primaire que du choc secondaire et est dimensionné pour prendre en compte les différences d'accélération subies lors de ces deux chocs. Les éléments dissipateurs pour le choc primaire et le choc secondaire respectivement sont disposés l'un à la suite de l'autre ce qui permet d'éviter la réinitialisation du système entre les deux chocs.

Le dispositif selon l'invention est muni de billes roulant sur elles-mêmes, ce qui assure l'absence de blocage dans tous les cas de figures. Il fonctionnera toujours, pour autant que le niveau du choc soit au-delà du niveau critique défini a priori. Si la charge explosive est trop importante par rapport à celle pour lequel le dispositif a été dimensionné, l'atténuateur de choc fonctionnera en dissipant le maximum théorique sans risque quelconque de blocage contrairement, par exemple, à un dispositif à dissipation hydraulique.

## Revendications

1. Dispositif d'absorption d'énergie (1) comprenant :
- un support (23),
- un élément dissipateur (14) monté autour dudit support (23) et destiné à se déformer plastiquement sous l'effet d'un choc,
- des billes (12) montées avec une pression donnée contre l'élément dissipateur (14) et destinées à déformer l'élément dissipateur (14),
**caractérisé en ce que** le support (23) est muni de rainures (24), lesdites billes (12) étant montées en regard des rainures (24) du support (23) et étant destinées à déformer l'élément dissipateur (14) sur la longueur des rainures (24).

2. Dispositif selon la revendication 1, comprenant un corps creux (8) dans lequel l'élément dissipateur (14) et son support (23) sont destinés à coulisser lors du choc, les billes (12) étant montées dans une cage circulaire (13) et prenant appui dans la direction longitudinale du corps creux (8) sur une surface intérieure dudit corps creux (8) et dans la direction transversale du corps creux (8) sur l'élément dissipateur (14).

3. Dispositif selon la revendication 1 ou 2, comprenant des moyens pour ajuster la pression d'application des billes (12) contre l'élément dissipateur (14).

4. Dispositif selon la revendication 3, dans lequel lesdits moyens comprennent un écrou (15) dont la rotation en utilisation entraine un déplacement des billes (12) le long de la surface intérieure du corps creux (8), ce qui permet d'ajuster la pression d'application des billes (12) sur l'élément dissipateur (14).

5. Dispositif selon la revendication 3 ou 4, dans lequel lesdits moyens comportent un moteur (17) et un contrôleur (18) relié à un ou plusieurs capteurs (19,20,21,22).

6. Dispositif selon l'une quelconque des revendications précédentes, dans lequel le support (23) comporte une partie cylindrique, les rainures (24) étant disposées sur la surface extérieure de la partie cylindrique et s'étendant selon la direction longitudinale de ladite partie cylindrique.

7. Dispositif selon l'une quelconque des revendications précédentes, dans lequel l'élément dissipateur (14) forme un manchon annulaire d'épaisseur variable le long de sa direction longitudinale.

8. Dispositif selon l'une quelconque des revendications précédentes, dans lequel l'élément dissipateur (14) comporte selon sa direction longitudinale deux parties successives, appelées première partie (29) et seconde partie (30), présentant des caractéristiques géométriques et/ou physico-chimiques différentes afin d'amortir respectivement un premier choc et un second choc.

9. Dispositif selon la revendication 8, dans lequel la seconde partie (30) est plus courte et plus épaisse que la première partie (29).

10. Dispositif selon la revendication 7, dans lequel l'épaisseur de l'élément dissipateur (14) est croissante par rapport à la direction de déplacement de l'élément dissipateur (14) en cas de choc.

11. Dispositif selon l'une quelconque des revendications 2 à 10, dans lequel le support (23) est surmonté à une extrémité d'une plaque (26) munie de languettes (27) reposant sur une extrémité du corps creux (8).

12. Véhicule comportant un dispositif d'absorption d'énergie selon l'une quelconque des revendications précédentes.

13. Système de conditionnement pour largage de matériel, de biens ou de personnes comportant un dispositif d'absorption d'énergie selon l'une quelconque des revendications 1 à 11.

14. Procédé d'absorption d'énergie destiné à protéger une structure et/ou un occupant lors d'un choc à l'aide du dispositif selon l'une quelconque des revendications 2 à 11, ledit procédé comprenant une étape de mouvement relatif de l'élément dissipateur (14) et de son support (23) par rapport au corps creux (8) donnant lieu à une déformation plastique de l'élément dissipateur (14) par les billes (12), **caractérisé en ce que** lesdites billes (12) sont guidées dans les rainures (24).

15. Procédé selon la revendication 14, dans lequel les billes (12) déforment l'élément dissipateur (14) sur une première partie (29) lors d'un premierchoc et sur une seconde partie (30) distincte de la première partie (29) lors d'un second choc, le premier choc survenant lorsqu'un véhicule saute sur un engin explosif et le second choc survenant lorsque le véhicule retombe sur le sol.

## Patentansprüche

1. Energieabsorptionsvorrichtung (1), umfassend:
- einen Halter (23),
- ein Verteilungselement (14), das um den Halter (23) montiert und bestimmt ist, sich unter der Wirkung eines Stoßes plastisch zu verformen,
- Kugeln (12), die mit einem bestimmten Druck gegen das Verteilungselement (14) montiert sind und bestimmt, das Verteilungselement (14) zu verformen,
**dadurch gekennzeichnet, dass** der Halter (23) mit Rillen (24) ausgestattet ist, wobei die Kugeln (12) gegenüber Rillen (24) des Halters (23) angebracht sind und bestimmt, das Verteilungselement (14) über die Länge der Rillen (24) zu verformen.

2. Vorrichtung nach Anspruch 1, umfassend einen Hohlkörper (8), in welchem das Verteilungselement (14) und sein Halter (23) bestimmt sind, bei dem Stoß zu gleiten, wobei die Kugeln (12) in einem runden Käfig (13) montiert sind und sich in der Längsrichtung des Hohlkörpers (8) auf einer inneren Oberfläche des Hohlkörpers (8) und in der Querrichtung des Hohlkörpers (8) auf dem Verteilungselement (14) abstützen.

3. Vorrichtung nach Anspruch 1 oder 2, umfassend Mittel, um den Anpressdruck der Kugeln (12) gegen das Verteilungselement (14) einzustellen.

4. Vorrichtung nach Anspruch 3, wobei die Mittel eine Mutter (15) umfassen, deren Rotation im Gebrauch eine Verlagerung der Kugeln (12) entlang der inneren Oberfläche des Hohlkörpers (8) bewirkt, was erlaubt, den Anpressdruck der Kugeln (12) auf das Verteilungselement (14) einzustellen.

5. Vorrichtung nach Anspruch 3 oder 4, wobei die Mittel einen Motor (17) und einen Controller (18) aufweisen, der mit einem oder mehreren Sensoren (19, 20, 21, 22) verbunden ist.

6. Vorrichtung nach einem der vorangehenden Ansprüche, wobei der Halter (23) einen zylindrischen Teil aufweist, wobei die Rillen (24) auf der äußeren Oberfläche des zylindrischen Teils angeordnet sind und sich in Längsrichtung des zylindrischen Teils erstrecken.

7. Vorrichtung nach einem der vorangehenden Ansprüche, wobei das Verteilungselement (14) eine ringförmige Manschette variabler Dicke entlang seiner Längsrichtung bildet.

8. Vorrichtung nach einem der vorangehenden Ansprüche, wobei das Verteilungselement (14) in seiner Längsrichtung zwei aufeinanderfolgende Teile, bezeichnet als erster Teil (29) und zweiter Teil (30), aufweist, die unterschiedliche geometrische und/oder physikalisch-chemische Merkmale aufweisen, um jeweils einen ersten Stoß und einen zweiten Stoß zu dämpfen.

9. Vorrichtung nach Anspruch 8, wobei der zweite Teil (30) kürzer und dicker als der erste Teil (29) ist.

10. Vorrichtung nach Anspruch 7, wobei die Dicke des Verteilungselements (14) in Bezug zur Verlagerungsrichtung des Verteilungselements (14) bei einem Stoß zunehmend ist.

11. Vorrichtung nach einem der Ansprüche 2 bis 10, wobei über dem Halter (23) an einem Ende eine Platte (26) steht, die mit Zungen (27) ausgestattet ist, die auf einem Ende des Hohlkörpers (8) aufliegen.

12. Fahrzeug, aufweisend eine Energieabsorptionsvorrichtung nach einem der vorangehenden Ansprüche.

13. Konditioniersystem für das Absetzen von Material, Gütern oder Personen, aufweisend eine Energieabsorptionsvorrichtung nach einem der Ansprüche 1 bis 11.

14. Verfahren zur Absorption von Energie, das bestimmt ist, eine Struktur und/oder einen Insassen bei einem Stoß mit Hilfe der Vorrichtung nach einem der Ansprüche 2 bis 11 zu schützen, wobei das Verfahren einen Schritt der relativen Bewegung des Verteilungselements (14) und seines Halters (23) in Bezug zum Hohlkörper (8) umfasst, eine plastische Verformung des Verteilungselements (14) durch die Kugeln (12) bewirkend, **dadurch gekennzeichnet, dass** die Kugeln (12) in den Rillen (24) geführt werden.

15. Verfahren nach Anspruch 14, wobei die Kugeln (12) das Verteilungselement (14) über einen ersten Teil (29) bei einem ersten Stoß und über einen zweiten Teil (30), der sich vom ersten Teil (29) unterscheidet, bei einem zweiten Stoß verformen, wobei der erste Stoß erfolgt, wenn ein Fahrzeug auf ein explosives Gerät springt und der zweite Stoß erfolgt, wenn das Fahrzeug auf den Boden fällt.

## Claims

1. An energy absorption device (1) comprising:
- a support (23),
- a dissipating element (14) mounted around said support (23) and intended to deform plastically under the effect of a shock,
- balls (12) mounted with a given pressure against the dissipating element (14) and intended to deform the dissipating element (14),
**characterized in that** the support (23) is provided with grooves (24), said balls (12) being mounted opposite the grooves (24) of the support (23) and being intended to deform the dissipating element (14) along the length of the grooves (24).

2. The device according to claim 1, comprising a hollow body (8) wherein the dissipating element (14) and its support (23) are intended to slide during the shock, the balls (12) being mounted in a circular cage (13) and bearing in the longitudinal direction of the hollow body (8) on an inner surface of said hollow body (8) and in the transverse direction of the hollow body (8) on the dissipating element (14).

3. The device according to claim 1 or 2, comprising means for adjusting the pressure with which the balls (12) are pressed against the dissipating element (14).

4. The device according to claim 3, wherein said means comprise a nut (15) the rotation of which during use causes a movement of the balls (12) along the inner surface of the hollow body (8), which makes it possible to adjust the pressure with which the balls (12) are pressed on the dissipating element (14).

5. The device according to claim 3 or 4, wherein said means comprise a motor (17) and a controller (18) connected to one or more sensors (19, 20, 21, 22).

6. The device according to any one of the preceding claims, wherein the support (23) comprises a cylindrical part, the grooves (24) being positioned on the outer surface of the cylindrical part and extending in the longitudinal direction of said cylindrical part.

7. The device according to any one of the preceding claims, wherein the dissipating element (14) forms an annular sleeve with a variable thickness along its longitudinal direction.

8. The device according to any one of the preceding claims, wherein the dissipating element (14) comprises two successive parts along its longitudinal direction, called the first part (29) and the second part (30), having different geometric and/or physicochemical characteristics so as to respectively damp a first shock and a second shock.

9. The device according to claim 8, wherein the second part (30) is shorter and thicker than the first part (29).

10. The device according to claim 7, wherein the thickness of the dissipating element (14) increases relative to the movement direction of the dissipating element (14) in case of shock.

11. The device according to any one of claims 2 to 10, wherein the support (23) is topped at one end with a plate (26) provided with tongues (27) resting on one end of the hollow body (8).

12. A vehicle comprising an energy absorption device according to any one of the preceding claims.

13. A packaging system for airdropping materials, goods or people comprising an energy absorption device according to any one of claims 1 to 11.

14. An energy absorption method intended to protect a structure and/or an occupant during a shock, using a device according to any one of claims 2 to 11, said method comprising a step for relative movement of the dissipating element (14) and its support (23) with respect to the hollow body (8) leading to a plastic deformation of the dissipating element (14) by the balls (12),
**characterized in that** said balls (12) are guided in the grooves (24).

15. The method according to claim 14, wherein the balls (12) deform the dissipating element (14) over a first part (29) during a first shock and over a second part (30) distinct from the first part (29) during a second shock, the first shock occurring when a vehicle explodes on an explosive device and the second shock occurring when the vehicle falls back to the ground.
